# EUROPEAN PATENT SPECIFICATION

(11) **EP 0 804 690 B1**
(45) Date of publication and mention of the grant of the patent: **11.11.1998**
(21) Application number: 96900224.5
(22) Date of filing: 16.01.1996
(51) Int. Cl.: F16B 35/06, F16B 35/04, F16B 5/02

(54) **A SCREW**
SCHRAUBE
VIS

(30) Priority: 18.01.1995 CA 2140475
(43) Date of publication of application: 05.11.1997
(73) Proprietor: GRK Canada LTD., Thunder Bay Ontario P7C 4T9 (CA); Walther, Uli, Thunder Bay Ontario P7C 4T9 (CA)
(72) Inventor: WALTHER, Uli, Thunder Bay, Ontario P7C 4T9 (CA)
(74) Representative: Luderschmidt, Schüler & Partner GbR
(86) International application number: PCT/CA96/00023
(87) International publication number: WO 96/22472

(56) References cited:
- FR-A- 2 491 563
- GB-A- 2 072 781
- GB-A- 2 251 666
- GB-A- 2 273 325
- US-A- 3 898 706
- US-A- 4 621 963

## Description

The present invention relates to an integral screw, preferably a woodscrew, including a threaded stem portion having a free end and a root end integral with and corresponding in diameter to a minor base end of a co-axial frustoconical portion projecting axially from said root end, a convexly shaped head section near a major base end of the frustoconical portion, said head section being provided with centrally disposed screwdriver tool engagement recess compatible with a predetermined tool for driving said screw.

Wood screws belong to the most widely used fasteners in many different applications. For instance, it is often required that a wood screw be capable of fixedly holding a hardware such as a hinge wing or railway clamp. Another requirement often raised is that the specific axial pressure active under the screw head of a tightened screw be as low as possible while securing a firm hold. Another requisite is that the screw be capable of being applied without the need for countersinking the head as this may require an extra machining of at least one of the parts being joined. By the same token, it is often required that the screw positioned in place be as unobtrusive as possible on the surface to avoid the danger of injury, for instance, to animals in zoo structures, to children and to the general user.

Various types of screws are known which are directed to satisfy one or more of the above requirements. For instance, it is known from Italian Patent 475002 [Manfroni] to provide a railway clamp fastening wood screw which includes a cylindric portion of the shank of the screw above the threaded portion of the shank and just below the head. The cylindric portion is closely compatible with a bore in the railway clamp through which the screw passes into the wooden tie to hold the clamp down. Viewed from the standpoint of the present invention, the screw has the drawback that the specific pressure under the screw head is relatively high and that an axially upwardly projecting portion is required for engagement with a torque applying tool, in this case a socket wrench. This type of screw therefore would be unsuitable for applications where the specific pressure must be low, the fastening force high and the surface head as flush as possible to avoid or at least substantially reduce the danger of injury to a child or an animal.

The torque tool engaging projection is known to be replaced with various cutouts compatible with tools such as screwdrivers and a variety of these exists, from plain straight grooves as in Canadian Patent 27,387 (Rogers), to more complex sockets such as shown e.g. in US Patent 5,249,882 (Nagoshi et al.), Canadian Patent 400,454 (Purtell), Canadian Patent 1,248,374 (Rockenfeller et al.) or Published Canadian Patent Application 2,094,478 (Goss). GB-A-2072781 shows a similar screw with a strengthening portion under the head.

Prior art screws are usually unsuitable for use with power tools, where the screw must often withstand a relatively high torque while a low specific pressure under the head is required when the fastener is firmly in place. The screws having convexly shaped heads project above the surface of the workpiece often in obtrusive and potentially dangerous way which may cause injury.

It is an object of the present invention to provide a screw which would withstand a relatively high torque applied by a power tool, which would be capable, if required, to engage a predetermined size of a bore in a hardware such as a hinge wing, which could be applied, in case of a wood screw, without the need for pre-machining the surface of the workpiece to accommodate the screw head and which would, by the same token, exert a relatively small specific pressure under the head and would be of a configuration which projects from the workpiece surface in unobtrusive way, eliminating or at least substantially reducing the possibility of injury to the user of the particular workpiece.

According to one feature, the invention provides a screw of the aforesaid type, in which the head section includes a shallowly convex head portion which is integral with a washer portion. The washer portion includes a flat underside and a flat annular upper face concentric with the head portion and having a minor diameter equal to that of the head portion and a major diameter greater than that of the head portion.

An integral cylindric portion is located between the major base end and the flat underside to not only strengthen the structure of the screw making it more suitable for power tool drive, but also to provide a cylindric guide surface compatible with a pre-machined opening, e.g. in a hinge wing.

The strength and ease of application is further improved by another feature of the invention, namely that the minor base end of the frustoconical portion corresponds in diameter to that of the stem and the major base end of the frustoconical portion corresponds in diameter to that of the cylindric portion.

The axial length of the head portion is greater than the thickness of the washer portion, preferably by a ratio whereby the thickness of the washer portion is about 0.75 to about 0.9 of the axial length of the head portion. This ratio, combined with concave screwdriver engagement cavity in the head, provide for a smooth and safe surface, where the head and the washer do not present a potential source of injury or the like.

It is also preferred that the diameter of the cylindric portion be larger than axial length thereof, to provide an improved strength and a length of the cylindric portion sufficient, on the one hand, to safely engage a pre-machined bore of, say, a hinge wing, while avoiding, on the other hand, the need for machining a recess in the base to accommodate the increased diameter of the cylindric portion.

Further features and advantages of the invention will become apparent from the following description of several embodiments of the structure of the screw of the present invention, with reference to the accompanying drawings, it being understood that the principles of the combined structure can be used in other types of screws or bolts.

In the drawings:
- Figure 1: is a diagrammatic, enlarged side view of a wood screw including the combination of features according to the present invention;
- Figure 2: is a view similar to that of Fig. 1, in which the contour of a prior art screw of comparable size, with a hexagonal head is shown in broken lines for comparison of the contour of an applied screw;
- Figure 3: is a diagrammatic side view of a screw comprising the combination of the present invention, in which certain measurements are marked to provide examples of a number of variations in size;
- Figure 4: is a top plan view of Fig. 3;
- Figure 5: is a view similar to that of Fig. 3 but showing another embodiment of the invention; and
- Figure 6: is a top plan view of Fig. 5.

The screw shown in the drawings is an integral product made from suitable steel, it being understood that certain applications may warrant or require different material, for instance nylon.

The screw shown in the drawings comprises a stem portion 10. As is known, the stem portion has a free end portion 11 which, in the embodiment shown, is pointed. The opposite end of the stem 10 is designated as a root end 12. A major part of the stem portion 10 is cylindric, the only deviation being at the pointed free end 11 where the shape is conical. A helical thread 13 projects from the surface of the stem portion 10. It extends from the pointed free end 11 and terminates at a root end portion 14 of the thread 13, which is spaced from the root end 12 of the stem 10.

The root end 12 of the stem 10 is integral with a minor base end 15 of a frustoconical portion 16. The diameter of the root end 12 is the same as that of the minor base portion 15. Thus, the frustoconical portion 16 projects axially from the root end 12 and is coaxial with the root end about a common axis 17 of the screw.

The opposite end of the frustoconical portion 16 is a major base end 18. In the embodiment shown, the major base end 18 coincides with, and thus has the same diameter as a first end 19 of a root cylindric portion 20. The portions 18, 19 are integral and co-axial with the axis 17 and with each other.

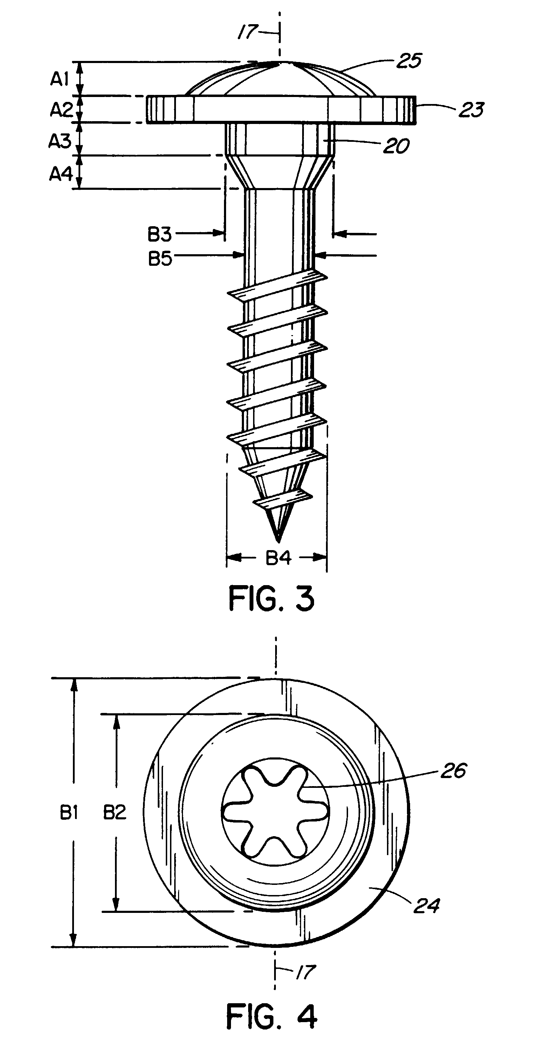

The other end 21 of the root cylindric portion 20 merges with a flat annular, downwardly facing underside 22 of a washer section 23 which is integral with the cylindric portion 20. Figs. 3 and 4 show that the diameter B1 (Fig. 4) is a multiple of that B3 (Fig. 3) of the second cylindric portion 20.

The washer section 23 defines a flat, annular upper face section 24. It is parallel with and is turned away from the underside 22.

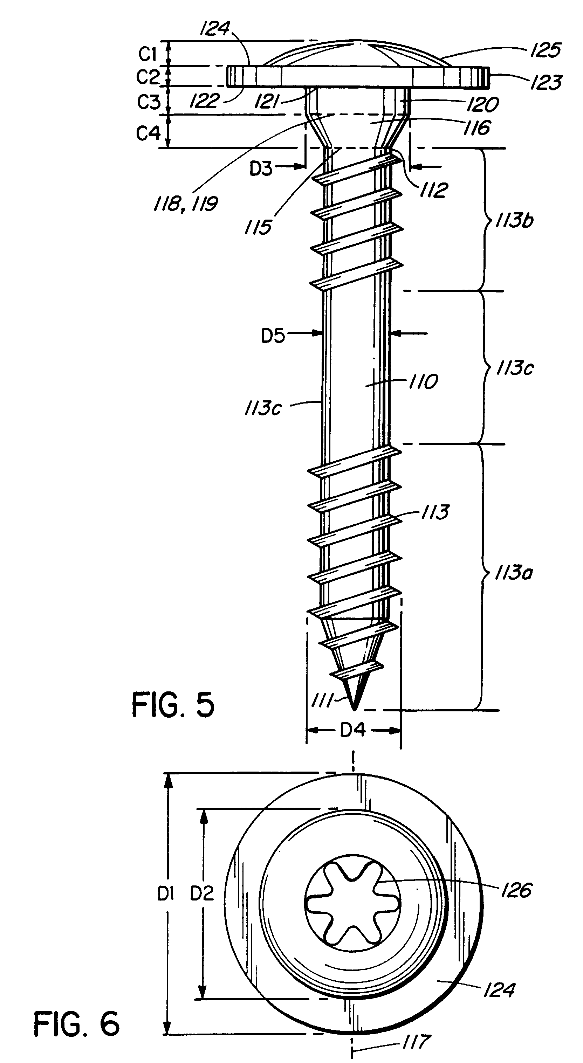

A centrally disposed, coaxial, shallowly convex head portion 25 projects upwardly from the upper face section 24. The head portion 25 is provided with centrally disposed drive tool engagement recess 26. The particular contour in plan of the recess is shown in Fig. 5. It is to be appreciated, however, that the specific type of the recess 26 is not a part of this invention and is optional. It has to be compatible with a predetermined tool for driving the screw into a base and preferably is suitable for use with a power tool when the screw is to be used in manufacturing furniture, wooden structures or other products where power screw driving tools are required.

Reference may now be had to the examples of different measurements of the described parts of the screws as diagrammatically shown in Figs. 3 and 4.

While certain applications may require otherwise, it is generally preferred that the axial length A3 of the root cylindric portion 20 be smaller than its diameter B3 (Fig. 3) as this arrangement facilitates the application of the screw without the need of pre-drilling a bore in the workpiece and it also improves the torque strength of the screw.

Another preferred feature is that while the specific diameter B2 of the head 25 is of course, smaller than the diameter B1 of the washer section 23 it is larger than the diameter B3 of the root cylindric portion 20. The latter diameter B3 may be dictated by the size of bores in hardware with which the screw is to be used, for instance a hinge wing.

The shallowly convex shape of the head portion combines with the particular physical structure of the washer section 23 to provide a relatively smooth, graduated rising of the head portion of the screw above the surface of the workpiece without sudden high corners which might cause injury, for instance to animals in zoo structures. The term "shallowly" convex used to describe the head portion 25 designates the general condition where the ratio of the axial length A1 of the head portion 25 to its diameter B2 is in the range of about 0.15 to about 0.25, thus, the axial height of the head portion 25 above the washer section 23 is less than about ¼ of the diameter of the head portion 25 at the upper surface of the washer section 25. By the same token, it is preferred that the ratio of the thickness A2 of the washer section 23 to the axial length A1 of the head portion 25 be in the range of about 0.75 to about 0.9, in other words, the thickness A2 of the washer 23 is smaller than the height A1 of the convex head portion 25.

With particular reference to Figs. 3 and 4, the following Table 1 presents three examples of different embodiments of the screw of the present invention, having typical physical measurements of individual portions of the screw. The three embodiments shown are 6, 7 and 8 mm which roughly corresponds to 1/4"; 5/16" and 3/8" wood screws each having a total length of about 80 mm, respectively. The respective size particulars of the inventive screw, are described using reference characters of Figs. 3 and 4.

**TABLE 1**

| SIZE PARTICULARS OF THREE EMBODIMENTS OF THE INVENTIVE SCREW (in mm) | | | |
|---|---|---|---|
| Size of the screw | 8 | 7 | 6 |
| A1 Head 25 height | 2.4 | 2 | 1.6 |
| A2 Washer 23 thickness range | 1.8-1.5 | 1.6-1.3 | 1.4-1 |
| A3 Axial length of root cylinder 20 | 2 (max) | 2 (max) | 1.5 (max) |
| A4 Axial length of frustocon. port. 16 | 2 (max) | 2 (max) | (1.5 max) |
| B1 Diameter range of washer section 23 | 18.5-16 | 16.5-14 | 14-12.5 |
| B2 Diameter range of head portion 25 | 10.5-10 | 10-9.7 | 9-8.7 |
| B3 Diameter range of cylindric root 20 | 9.4-8.9 | 7.8-7.3 | 6.3-5.9 |
| B4 Outer dia. range of thread 13 | 8-7.5 | 7.2-6.7 | 6.2-5.7 |
| B5 Diameter range of stem portion 10 | 5.4-5.1 | 4.82-4.79 | 4.24-4.18 |

It follows from the above that a wide range of screws according to the present invention can be produced.

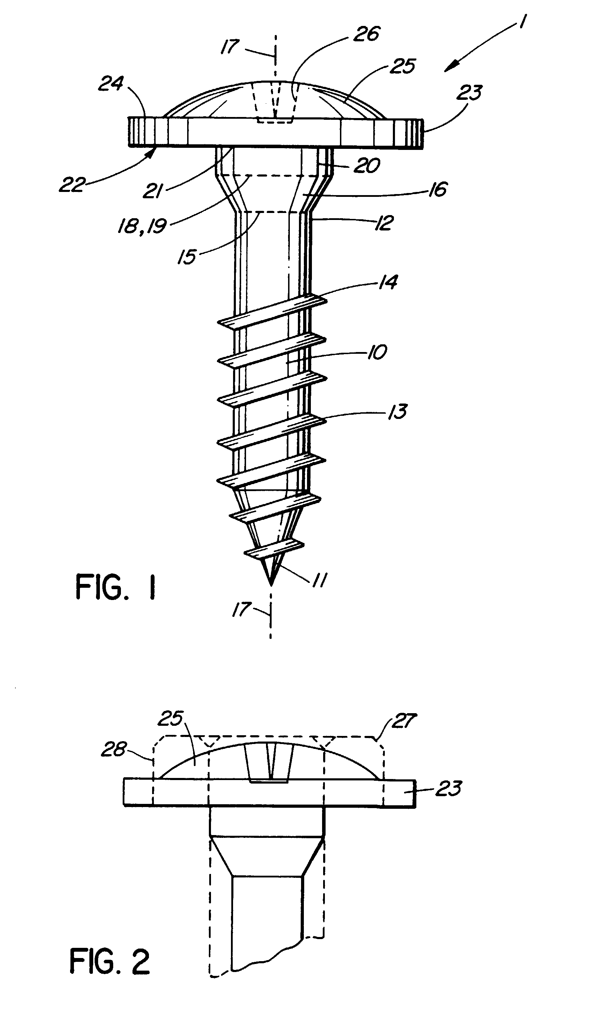

One such embodiment, which generally corresponds to the embodiments shown in the preceding table, is diagrammatically shown in Figs. 5 and 6. For simplicity, the corresponding parts of the representation of Figs. 5 and 6 is provided with the same reference numbers as in Figs. 1- 4 increased by 100. As in the embodiment of Figs. 1 - 4. there is a stem portion 110 having a pointed free end portion 111 and a root end 112.

The difference over the first group of embodiments is in that the cylindric stem 110 is longer and the helical thread is split into two sections: 113a at the tip 111, and 113b at the root end 112. The intermediate section 113c is cylindric.

While the measurements of the screw of Fig. 5 and 6 (and, of course also of Figs. 1 -4) are optional, it should be noted that the measurements C1 - D4 could generally correspond to those of Al - B4 of Figs. 1 - 4. However, the stem 110 would typically be longer, from about 135 mm to about 340 mm. Within such range, the length of the threaded portion 113a would be about 50-75 mm, the intermediate, unthreaded portion 113c would be about 50-220 mm long and the length of the upper threaded part 113b would be about 30-45 mm.

Apart from the above differences in the structure of the stem 110, the remaining parts of the screw of Figs. 5 and 6 are virtual replicas of the first representation: The root end 112 of the stem 110 is integral with a minor base end 115 of a frustoconical portion 116 which projects axially from the root end 112 and is coaxial with the root end about a common axis 117 of the screw. There is a major base end 118 which coincides with a first end 119 of a root cylindric portion 120.

The other end 121 of the root cylindric portion 120 merges with the planar underside 122 of a washer section 123. The washer section 123 has an upper face section 124.

A head portion 125 projects from the upper face section 124. The head portion 125 is provided with centrally disposed drive tool engagement recess 126.

In use, the screws can be driven in place either manually or by a power tool. When fully applied, the washer portion 23, 123 and its associated head 25, 125 present a minimum protrusion on the surface of a workpiece. Also, the intermediate structure components 16, 20, 116, 120 provide the required strength even if the screw is small and a tool engagement cavity is provided. This virtually eliminates the occurrence of time and labour consuming breakages of the screw during an assembly operation and the resulting defects in quality of the final product. The cylindric portion 20, 120 provides, if required, the desired engagement surface with a bore of a component to be fixed to a wooden structure, for instance a brace or a hinge. The enlarged surface of the washer section 23, 123 maintains a relatively low specific pressure at the face of the workpiece even on a strong tightening of the screw.

In use of the embodiment of Figs. 5 and 6, there is an added advantage. This embodiment is particularly useful where a layer of, say, insulation, is to be sandwiched between two wooden panels and where the panels are to be maintained at a predetermined spacing. The screw is driven through the first panel, then penetrates the insulation. Further penetration into the second panel does not compress or otherwise deform the insulation as the lower section 113a of the screw gradually moves out of contact with the insulation while, at the same time, the upper or root section 113b of the thread engages the first panel but not the insulation.

It has been established that the screw of the present invention, manufactured within the above tolerances possesses torque strength which makes it suitable for use with power screw driving tools while utilizing a drive tool engagement cavity or recess 26, 126. It is believed that this is due to an inventive feature whereby the length of the frustoconical portion 16, 116 generally corresponds to that of the root cylindric portion 20, 120.

Those skilled in the art will readily appreciate that various modifications can be made to the screw of the present invention departing from the structural particulars of the embodiments described, without departing from the scope of the present invention.

## Claims

1. An integral screw, particularly a wood screw, including a threaded stem portion (10, 110) having a free end (11, 111) and a root end (12, 112) integral with and corresponding in diameter to a minor base end of a co-axial frustoconical portion (16, 116) projecting axially from said root end (12, 112), a convexly shaped head section (23-25, 123-125) near a major base end (18, 118) of the frustoconical portion (16, 116), said head section (23-25, 123-125) being provided with centrally disposed screw drive tool engagement recess (26, 126) compatible with a predetermined tool for driving said screw, a cylindric portion (20, 120) integrally formed with said head section (23-25; 123-125) said cylindric portion being located between the major base end (18, 118) and the head section (23-25; 123-125), said integral frustoconical portion (16, 116) being disposed at an end of the cylindric portion (20, 120) remote from said head section
**characterized in that**
the head section includes a shallowly convex head portion (25, 125) integrally formed with a washer portion (23, 123), said washer portion comprising a flat underside (22, 122) and a flat annular upper face (24, 124) having a minor diameter equal to that of the head portion (25, 125) and a major diameter greater than that of the head portion (25, 125), the ratio of the axial length (A1, C1) of the head portion (25, 125) to the diameter (B2, D2) thereof is about 0.15 to about 0.25.

2. The screw as claimed in claim 1, **characterized in that** the ratio of the thickness (A2, C2) of the washer portion to the axial length (A1, C1) of the head portion (25, 125) is smaller than 1, preferably from about 0.75 to about 0.9.

3. The screw as claimed in claim 1 or claim 2, **characterized in that** the diameter (B3, D3) of the cylindric portion (20, 120) is larger than the axial length (A4, C4) thereof.

4. The screw as claimed in any one of claims 1 - 3, **characterized in that** the axial length of the frustoconical portion (16, 116) is generally equal to that of the cylindric portion (20, 120).

## Patentansprüche

1. Eine integrale Schraube, insbesondere eine Holzschraube, mit einem mit einem Gewinde versehenen Schaftbereich (10, 110), der ein freies Ende (11, 111) und ein Fußende (12, 112) hat, das mit einem kleineren Basisende eines koaxialen kegelstumpfförmigen Bereichs (16, 116) einstückig ist, der sich axial von dem Fußende (12, 112) erstreckt und diesem in seinem Durchmesser entspricht, einem konvex ausgebildeten Kopfabschnitt (23-25, 123-125) nahe einem Hauptbasisende (18, 118) des kegelstumpfförmigen Bereichs (16, 116), wobei der Kopfabschnitt (23-25, 123-125) mit einer zentral angeordneten Schraubenziehereingriffsaussparung (26, 126) versehen ist, die mit einem bestimmten Werkzeug zum Anziehen der Schraube kompatibel ist, einem zylindrischen Bereich (20, 120), der einstückig mit dem Kopfabschnitt (23-25; 123-125) geformt ist, wobei der zylindrische Bereich zwischen dem Hauptbasisende (18, 118) und dem Kopfabschnitt (23-25; 123-125) angeordnet ist und der einstückige kegelstumpfförmige Bereich (16, 116) an einem Ende des zylindrischen Bereichs (20, 120) dem Kopfabschnitt abgewandt angeordnet ist, dadurch gekennzeichnet, daß der Kopfabschnitt einen flachen konvexen Kopfbereich (25, 125) umfaßt, der einstückig mit einem Unterlegbereich (23, 123) geformt ist, wobei der Unterlegbereich eine flache Unterseite (22, 122) und eine flache ringförmige Oberseite (24, 124) mit einem kleineren Durchmesser gleich dem des Kopfbereichs (25, 125) und einem größeren Durchmesser größer als der des Kopfbereichs (25, 125) aufweist, wobei das Verhältnis der Axiallänge (A1, C1) des Kopfbereichs (25, 125) und dessen Durchmesser (B2, D2) etwa zwischen 0,15 und 0,25 liegt.

2. Die Schraube nach Anspruch 1, dadurch gekennzeichnet, daß das Verhältnis der Dicke (A2, C2) des Unterlegbereichs und der axialen Länge (A1, C1) des Kopfbereichs (25, 125) kleiner als 1, vorzugsweise etwa zwischen 0,75 - 0,9 ist.

3. Die Schraube nach Anspruch 1 oder 2, dadurch gekennzeichnet, daß der Durchmesser (B3, D3) des zylindrischen Bereichs (20, 120) größer als dessen axiale Länge (A4, C4) ist.

4. Die Schraube nach einem der Ansprüche 1-3, dadurch gekennzeichnet, daß die axiale Länge des kegelstumpfförmigen Bereichs (16, 116) im wesentlichen gleich der des zylindrischen Bereichs (20, 120) ist.

## Revendications

1. Vis intégrale, particulièrement une vis à bois, comportant une partie de tige filetée (10, 110) avec un bout libre (11, 111) et un bout enraciné (12, 112) intégral avec et, en ce qui concerne son diamètre, correspondant avec le bout à la base mineure d'une partie tronconique coaxiale (16, 116) saillant axialement dudit bout enraciné (12, 112), une section de tête en forme convexe (23-25, 123-125) auprès d'un bout à la base majeure (18, 118) de la partie tronconique (16, 116), ladite section de tête (23-25, 123-125) étant pourvue d'un encastrement pour la prise d'outils de manoeuvre de vis (26, 126) situé dans le centre et compatible avec un outil prédéterminé pour serrer ladite vis, une partie cylindrique (20, 120) formée intégralement avec ladite section de tête (23-25; 123-125), ladite partie cylindrique étant située entre le bout à la base majeure (18, 118) et la section de tête (23-25; 123-125), ladite partie tronconique intégrale (16, 116) étant disposée à un bout de la partie cylindrique (20, 120) loin de ladite section de tête,
**caractérisée en ce que**
la section de tête comporte une section de tête faiblement convexe (25, 125) et intégralement formée avec une partie der rondelle (23, 123), ladite partie de rondelle comportant un dessous plat (22, 122) et une face supérieure plate et annulaire (24, 124) d'un diamètre mineur égal à celui de la partie de tête (25,125) et d'un diamètre majeur plus grand que celui de la partie de tête (25, 125), dont le rapport entre la longueur axiale (A1, C1) de la partie de tête (25, 125) et son diamètre (B2, D2) est environ 0,15 à environ 0,25.

2. Vis comme revendiquée dans la revendication 1, caractérisée en ce que le rapport entre l'épaisseur (A2, C2) de la partie der rondelle et la longueur axiale (A1, C1) de la partie de tête (25, 125) est plus petit que 1, de préférence d'environ 0,75 à environ 0,9.

3. Vis comme revendiquée dans la revendication 1 ou 2, caractérisée en ce que le diamètre (B3, D3) de la partie cylindrique (20, 120) est plus grand que sa longueur axiale (A4, C4).

4. Vis comme revendiquée dans chacune des revendications 1 à 3, caractérisée en ce que la longueur axiale de la partie tronconique (16, 116) est généralement égal à celle de la partie cylindrique (20, 120).
